# EUROPEAN PATENT SPECIFICATION

(11) **EP 1 358 038 B1**
(45) Date of publication and mention of the grant of the patent: **03.09.2008**
(21) Application number: 02710915.6
(22) Date of filing: 25.01.2002
(51) Int. Cl.: B23K 33/00

(54) **METHOD FOR JOINING METAL OBJECTS TOGETHER BY WELDING**
VERFAHREN ZUM MITEINANDERVERBINDEN VON METALLOBJEKTEN DURCH SCHWEISSEN
PROCEDE D'ASSEMBLAGE D'OBJETS METALLIQUES PAR SOUDAGE

(30) Priority: 31.01.2001 FI 20010183
(43) Date of publication of application: 05.11.2003
(73) Proprietor: Outokumpu Oyj, 02200 Espoo (FI)
(72) Inventor: TORVINEN, Terho, FIN-67700 Kokkola (FI)
(74) Representative: Zipse Habersack Kritzenberger
(86) International application number: PCT/FI2002/000061
(87) International publication number: WO 2002/060638

(56) References cited:
- DE-A1- 19 603 894
- DE-A1- 19 703 996
- US-A- 2 269 224

## Description

The present invention relates to a method for joining two-dimensional metal objects, such as metal plates, or three-dimensional metal objects, such as metal tubes and three-dimensional shaped pieces, together by welding.

A two-dimensional metal object, such as a metal plate, can be joined to another similar metal object in many different ways, for instance with a butt joint, with a butt joint with cover plate, or with a folded joint. In addition, all of said joining methods also have various different ways for realizing the joint, depending on the mutual positions of the metal objects to be joined together. A joining method combined of said methods can also be used, for example a keyed lock seam joint. Even a three-dimensional metal object, such as a metal tube or a three-dimensional shaped object can be joined to another similar metal object in many different ways, for instance with a butt joint, a butt and lap joint, a bell butt joint, a spigot joint or a sleeve joint. In similar fashion as in the case of metal plates, also the joining methods of metal tubes have many different ways for realizing the joint and are named according to the mutual positions of the metal objects to be joined together.

The joining together of products made of a two-dimensional metal object, such as a metal plate, or of a three-dimensional metal object, such as metal tube or a three-dimensional shaped object, with a butt joint is problematic, in case the high standard for precision in the junction seam should be fulfilled. When welding is applied for butt jointing two-dimensional or three-dimensional metal objects together, the welding is generally performed for instance as a stepped but joint, in which case the edge of the first object to be joined is stepped with respect to the edge of the other object. It is true that when metal objects are welded together by this kind of butt joint, the so-called zero groove that is the target is achieved, in which case the facing surfaces of the metal objects to be joined together are positioned at equal distances essentially throughout the joining surface. However, problems arise due to material losses and the lack of a planar quality in the surface.

According to prior art, documents US 5,456,405 and DE 197 03 996 relate to a welding method by means of a butt joint, wherein a small gap abutting arrangement of two weldable bevelled plate edges or hollow body edges is achieved prior to butt welding without weld additive, especially a laser weld beam.

Further, document DE 196 03 894 A1 describes a method and an apparatus for preparing the edges of sheet-metal components to be joined by laser butt-welding in which method the edges of the components are made to slope relative to the sheet plane in such a way that they essentially run parallel to each other.

The object of the invention is to eliminate some of the drawbacks of the prior art and to achieve an improved method for joining metal objects with a butt joint together by means of welding, by which method a zero groove is advantageously achieved between the metal objects to be joined together. The essential novel features of the invention are enlisted in the appended claims.

According to the invention, at the facing edges of two-dimensional or three-dimensional metal objects to be joined by butt joint welding, there is made a self-directing fitting where the cutting angle in relation to the metal object edge varies within the range of 0 - 50 degrees, advantageously 20 - 30 degrees. The facing junction surfaces of metal objects, such as metal plates, metal tubes or metal objects combined of elements of various shapes, to be joined together by butt joint welding, are beveled so that the edges of the metal objects, to be joined by butt joint welding, are throughout the welding surface defined by the self-directing fitting placed at an essentially equal distance from each other in order to create an essentially precise welding seam between two two-dimensional or respectively three-dimensional metal objects.

By means of the butt joint welding according to the invention where a self-directing fitting is used for joining two-dimensional or three-dimensional metal objects, the welding expenses can be essentially reduced, because in butt joint welding where a self-directing fitting is used, the metal objects to be joined need not be bent with respect to each other, as is the case for instance in a stepped butt joint welding of metal objects. In the butt joint welding according to the invention, at the joining weld of the metal objects to be joined, it is not necessary to install a particular joining piece that is separate from the metal objects to be joined. In a butt joint applying a self-directing fitting, the joining of two metal objects together is carried out by placing the edges of said metal objects against each other, so that the metal object edges are, owing to the self-directing fitting, placed at an essentially equal distance from each other essentially throughout the whole welding surface.

The junction seam according to the invention for two-dimensional or three-dimensional metal objects, obtained in butt joint welding with a self-directing fitting, is created by beveling a self-directing fitting at the facing edges of the metal objects to be joined, by means of which fitting the metal objects to be joined are set in an overlapping fashion throughout the whole of the welding surface. By varying the cutting angle used in the beveling within the range 0 - 50 degrees, advantageously 20 - 30 degrees, the self-directing fitting arranged between the metal objects is made, when the metal objects are placed in a horizontal position, essentially stepless in the longitudinal direction of the edge provided with the fitting, and essentially gapless both in the longitudinal and transversal direction of the edge provided with the fitting. Consequence, also the welding seam obtained according to the method of the invention is made essentially homogeneous in thickness throughout the whole of the welding surface, which as such improves the operation of the welding seam control devices.

When applying the self-directing fitting between two-dimensional or three-dimensional metal objects, which fitting enables the welding method according to the invention, the beveling of the metal object edges is advantageously carried out in cycles, so that during one cycle, only parallel bevels are made in the metal objects under operation, and during the next cycle, there are made bevels in the opposite direction. Thus the making of the bevels at the metal object edges can be advantageously speeded up, because it is not necessary to adjust the set values of the device used in the beveling process during a cycle.

In the welding method according to the invention of two-dimensional or three-dimensional metal objects, there is advantageously applied welding by laser beam. According to the invention, there is advantageously used a process with a narrow molten weld pool. In the welding operation, the placing of the welds is advantageously carried out by a weld inclined according to the weld groove. In the placing of the welds, there can also be applied a perpendicular double weld that closes the weld groove in an alternating fashion either above or underneath the metal object. Likewise, there can be used a diode laser, in which case the weld defined by the self-directing fitting can be realized as one wide welding seam.

The invention is described in more detail below with reference the appended drawings, where
figure 1 shows a preferred embodiment of the invention applied to a three-dimensional metal object, seen in a schematical side-view illustration,
figure 2 shows another preferred embodiment of the invention applied to a two-dimensional metal object, seen in a schematical side-view illustration, and
   figure 3 shows a third preferred embodiment of the invention, seen in a schematical side-view illustration.

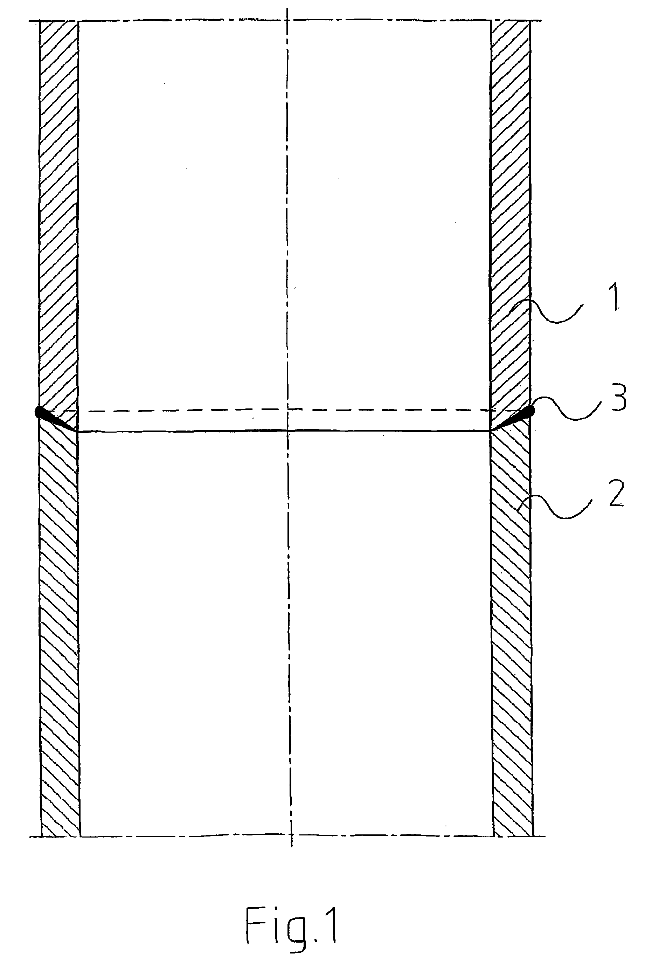

In figure 1, the metal objects 1 and 2 are welded together by means of an inclined weld 3, by laser welding, according to the cutting angle of 30 degrees applied in the beveling of the self-directing fitting.

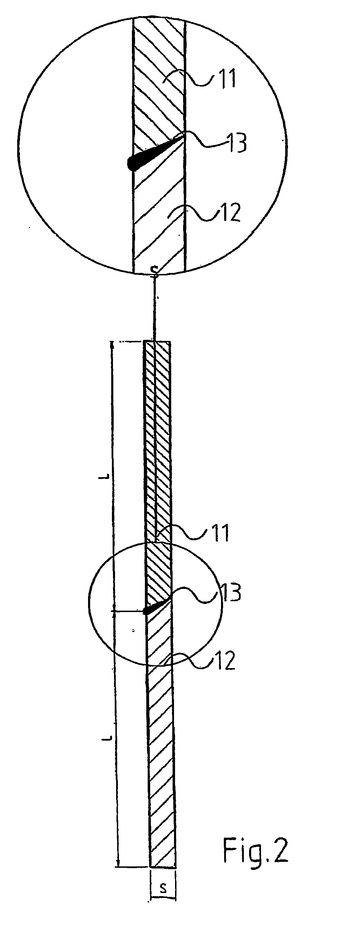

In figure 2, the metal plates 11 and 12 are welded together by laser welding in a process corresponding to that illustrated in figure 1, by means of an inclined weld 13, according to the cutting angle of 30 degrees applied in the beveling of the self-directing fitting.

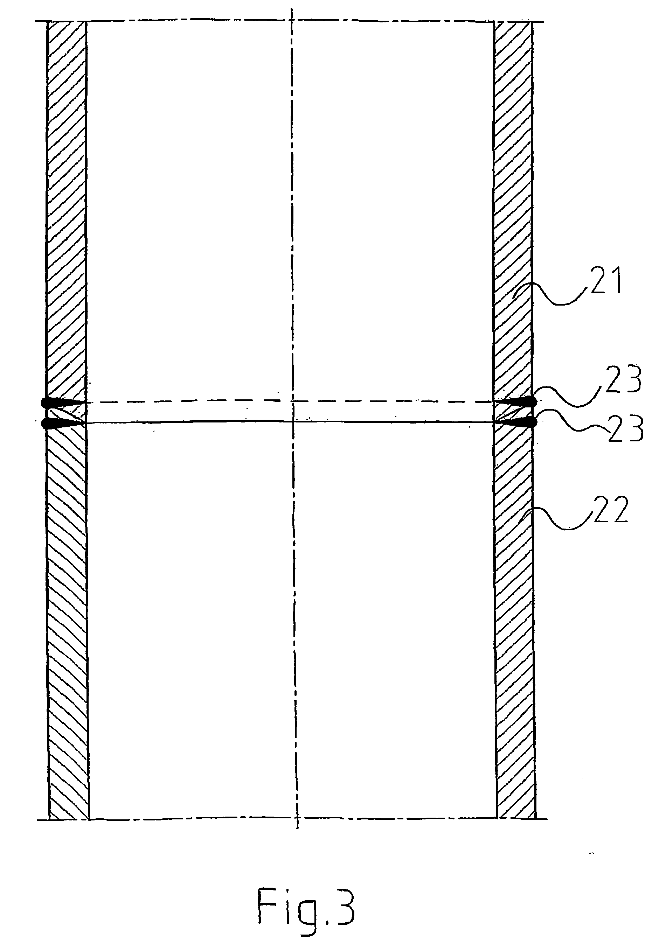

In figure 3, the metal plates 21 and 22 are welded together by laser welding, by applying a double weld 23 that is perpendicular to the surface of the metal plates 21 and 22. The double weld 23 closes the weld groove of the welding seam in an alternating fashion either on the top surface of the metal plates 21 and 22 or on the bottom surface of the metal plates 21 and 22.

## Claims

1. A method for joining two-dimensional or three-dimensional metal objects together by welding with a butt joint, wherein in order to create the welding groove, at the facing edges of the metal objects (1, 2; 11, 12; 21,22) to be welded, there is made a self-directing fitting with an angle with respect to the surface of the metal objects being within the range of 0 - 50 degrees, advantageously 20 - 30 degrees, **characterized by** varying the cutting angle used in the bevelling within said range, providing a self-directing fitting essentially stepless in the longitudinal direction of the edge and essentially gapless both in the longitudinal and the transversal direction of the edge provided with the fitting.

2. A method according to claim 1, **characterized in that** laser welding is used for joining the metal plates (1, 2; 11,12; 21, 22) together.

3. A method according to claim 1 or 2, **characterized in that** for joining the metal objects (1,2;11,12;21,22) together, there is used a weld (3) that is inclined according to the self-directing fitting.

4. A method according to claim 1 or 2, **characterized in that** for joining the metal objects (1,2;11,12;21,22) together, there is used a double weld (13) that is arranged in a perpendicular position in relation to the surface of the metal objects (1,2;11,12;21,22).

5. A method according to claim 1, **characterized in that** a diode laser is used for joining the metal objects together.

## Patentansprüche

1. Verfahren zum Verbinden zweidimensionaler oder dreidimensionaler Metallobjekte mittels Stumpfstoßschweißens, wobei zur Schaffung der Schweißfuge an den einander zugewandten Rändern der zu verschweißenden Metallobjekte (1, 2; 11, 12; 21, 22) eine selbstausrichtende Fassung mit einem Winkel bezüglich der Oberfläche der Metallobjekte in dem Bereich von 0 - 50°, vorteilhafterweise 20 - 30° gemacht wird,
**dadurch gekennzeichnet, dass** der beim Fasen vorgesehene Schnittwinkel innerhalb dieses Bereichs variiert und in der Längsrichtung des Randes eine im Wesentlichen stufenlose selbstausrichtende Passung geschaffen ist, die sowohl in der Längs- als auch in der Querrichtung des für die Fassung vorgesehenen Randes im Wesentlichen spaltlos ist.

2. Verfahren nach Anspruch 1, **dadurch gekennzeichnet, dass** zum Verbinden der Metallplatten (1, 2; 11, 12; 21, 22) ein Laserschweißverfahren angewendet wird.

3. Verfahren nach einem der Ansprüche 1 oder 2, **dadurch gekennzeichnet, dass** zum Verbinden der Metallobjekte (1, 2; 11, 12; 21, 22) eine Schweißnaht (3) verwendet wird, die gemäß der selbstausrichtenden Fassung geneigt ist.

4. Verfahren nach Anspruch 1 oder 2, **dadurch gekennzeichnet, dass** zum Verbinden der Metallobjekte (1, 2; 11, 12; 21, 22) eine doppelte Schweißnaht (13) verwendet wird, die in einer rechtwinkligen Position relativ zur Oberfläche der Metallobjekte (1, 2; 11, 12; 21, 22) angeordnet ist.

5. Verfahren nach Anspruch 1, **dadurch gekennzeichnet, dass** zum Verbinden der Metallobjekte ein Diodenlaser verwendet wird.

## Revendications

1. Procédé d'assemblage d'objets métalliques bidimensionnels ou tridimensionnels par soudage avec un assemblage bout à bout, dans lequel, afin de créer la rainure de soudage, un raccord à auto-positionnement est formé sur les côtés en opposition des objets métalliques (1, 2 ; 11, 12 ; 21, 22) devant être soudés, ledit raccord formant un angle par rapport à la surface des objets métalliques compris entre 0 et 50 degrés, avantageusement entre 20 et 30 degrés,
**caractérisé par** la variation dans ladite plage de l'angle de coupe utilisé dans le chanfreinage, offrant un raccord à auto-positionnement essentiellement continu dans le sens longitudinal du bord et essentiellement sans intervalle dans les sens longitudinal et transversal du bord muni du raccord.

2. Procédé selon la revendication 1,
**caractérisé par le fait qu'**un soudage par laser est utilisé pour assembler les plaques de métal (1, 2 ; 11, 12 ; 21, 22).

3. Procédé selon la revendication 1 ou 2,
**caractérisé par le fait que**, pour assembler les objets métalliques (1, 2 ;11, 12 ;21, 22), une soudure (3) inclinée selon le raccord à auto-positionnement est utilisée.

4. Procédé selon la revendication 1 ou 2,
**caractérisé par le fait que**, pour assembler les objets métalliques (1, 2 ;11, 12 ;21, 22), une soudure double (13) positionnée de manière perpendiculaire par rapport à la surface des objets métalliques (1, 2 ;11, 12 ; 21, 22) est utilisée.

5. Procédé selon la revendication 1,
**caractérisé par le fait qu'**une diode laser est utilisée pour assembler les objets métalliques.
